# FASCICULE DE BREVET EUROPEEN

(11) **EP 1 090 833 B1**
(45) Date de publication et mention de la délivrance du brevet: **29.12.2004**
(21) Numéro de dépôt: 00121896.5
(22) Date de dépôt: 06.10.2000
(51) Int. Cl.: B63B 43/00, B63B 3/56, H02G 3/22, F16L 5/04, B63B 3/68

(54) **Traversée de cloison étanche au feu et au gaz**
Feuer- und gasdichte Schottdurchführung
Fire and gas tight bulkhead penetration

(30) Priorité: 07.10.1999 IT GE990121; 05.10.2000 IT GE000120
(43) Date de publication de la demande: 11.04.2001
(73) Titulaire: IMPRESA MARINONI srl, 16152 Genova (IT)
(72) Inventeur: Ronco, Romeo, 16124 Genova (IT)
(74) Mandataire: Maritano Maello, Giovanna

(56) Documents cités:
- EP-A- 0 919 459
- EP-A- 0 937 931
- EP-A- 0 950 604
- WO-A-95/32345
- WO-A-99/24682
- FR-A- 2 671 817

## Description

La présente invention concerne un dispositif de fermeture des ouvertures sur les profilés de renfort et des espaces libres présents entre les parois des cabines et des couloirs et des structures navales, aussi bien dans le sens transversal que longitudinal ainsi que le procédé pour la mise en oeuvre du dispositif.

Dans les constructions navales, outre les portes coupe-feu, il est prescrit que pour chaque zone de compartimentage contre le feu ("fire zone") soient installés des éléments aptes à obturer tout type d'ouverture et/ou d'espace existant, afin d'éviter la propagation de la fumée et des flammes, en cas d'incendie.

Par conséquent, pour chaque "fire zone", sur la structure transversale du navire sont disposés des éléments de renfort métalliques constitués par un bau et par des hiloires.

Lesdites structures renforcées sont plus résistantes par rapport aux fers de renfort communs, qui sont montés à chaque intervalle de la charpente, c'est-à-dire tous les 500ö600 mm environ.

Pour limiter l'encombrement des installations auxiliaires du navire, par exemple des tuyaux, conduits et câbles, celles-ci traversent les ouvertures prévues dans les baux. Il y aura des ouvertures occupées et des ouvertures non occupées. Il est indispensable que tous les ouvertures soient tamponnées, tout comme les interstices entre les panneaux des cabines et la structure navale, au moyen de fermetures de classe B15 et, à des intervalles définis, au moyen de dispositifs coupe tirages.

Les parois qui délimitent les cabines et les couloirs doivent être de classe B15, c'est-à-dire qu'elles doivent résister au feu pendant 15 minutes au moins.

Les fermetures de classe B15 doivent posséder les mêmes caractéristiques qu'une paroi B15.

Les coupe tirages, par contre, sont des fermetures prescrites à des intervalles, par exemple tous les 14 mètres, indépendamment de toute autre structure et ils ont uniquement la fonction d'interrompre l'écoulement de l'air incendié, bloquant la propagation des fumées d'un éventuel incendie; par conséquent, ils doivent être incombustibles et en mesure de créer une barrière sans aucune interruption.

Selon la technique connue, les fermetures prescrites sont réalisés avec de la tôle galvanisée, qui est profilée en fonction de la dimension des ouvertures, aussi bien pour les coupe tirages que pour les fermetures transversales et longitudinales de classe B15.

Ensuite, la tôle est rivetée ou soudée sur la structure; le seul emploi de la tôle, en particulier en ce qui concerne les fermetures de classe B15, ne suffirait pas pour rétablir ou remplir les conditions requises par les prescriptions correspondantes. Pour cette raison, sur la tôle sont soudées des griffes, constituées par du fil de fer et au moyen desquelles on effectue la fixation de panneaux isolants, qui seront ensuite pliées.

L'inconvénient principal des fermetures connues est l'emploi considérable de main d'oeuvre, nécessaire pour l'installation des fermetures, comme nous l'avons décrite ci-dessus.

Un autre inconvénient des fermetures connues est l'augmentation considérable du poids qui, à bord des navires, doit toujours être réduit le plus possible.

On connaît déjà des parois à l'épreuve du feu réalisées au moyen d'une âme en fibres minérales sur laquelle est appliqué un revêtement, comme il est décrit par exemple dans les brevets FR2671817 et WO99/24682. Il s'agit toujours de parois entieres. Les inventions décrites ici présentent l'inconvénient de ne prévoir aucune adaptation des dites parois pour la fermeture d'ouvertures, ni leur fixage sur place en les soudant aux structures présentes, avec un matériau scellant, intumescent et résistant au feu, en respect des normes de sécurité navale en vigueur. Les inventions citées sont en effet utilisées dans d'autres domaines que le domaine naval.

Dans le brevet W09532345 est décrit une paroi entiere avec une structure en nid d'abeille revêtue de résine, qui est destinée à être utilisée dans le domaine naval, mais également celle-ci présente l'inconvénient de ne prévoir aucune adaptation de dite paroi pour la fermeture d'ouvertures, ni son fixage sur place en la soudant aux structures présentes, avec un matériel scellant, intumescent et résistant au feu.

Tous les inconvénients mentionnés ont été éliminés en adoptant la fermeture selon la présente invention ainsi que le procédé d'application correspondant.

Le but de la présente invention est de simplifier la mise en oeuvre des ouvrages de fermeture, rendant cette opération plus aisée et réduisant les coûts, tout en obtenant le grand avantage d'alléger la fermeture installée.

Dans ce but a été étudié l'emploi de panneaux spéciaux présentant les caractéristiques prescrites par les normes, tout en permettant une mise en oeuvre aisée et ayant un poids inférieur par rapport au produit appliqué selon la technique connue.

Le but de la présente invention est atteint par l'objet de la revendication 1. On utilise notamment des panneaux de fermeture en matériau isolant, sur lesquels est appliqué un revêtement constitué par une toile en fibre de verre ou par une fine feuille d'aluminium; les deux augmentent la stabilité du panneau sur place, lui confèrent une compacité d'ensemble supérieure, un aspect de finition considérable, une plus grande résistance au feu et élasticité au cours du temps, très importante à cause des vibrations toujours présentes à bord des navires.

Selon la présente invention, les panneaux sont fixés sur place au moyen d'un produit résistant au feu, confectionné en cartouches, grâce auxquelles il est possible de effectuer aisément le scellage du panneau le long du périmètre et en correspondance des passages des installations auxiliaires, évitant d'effectuer des soudures et des rivetages qui nécessitent une main d'oeuvre spécialisée.

Quelques-uns des nombreux avantages obtenus avec la présente invention sont les suivants.

La fermeture selon la présente invention est nettement plus avantageuse par rapport à l'emploi de la tôle connue, grâce à la facilité de mise en oeuvre, à la plus grande légèreté du produit et à ses possibilités d'adaptation.

En effet, même en correspondance des câbles et/ou des tuyaux, ceux-ci peuvent être scellés très aisément, grâce à la grande possibilité d'adaptation des panneaux, qui peuvent être façonnés au moyen d'un simple couteau (cutter), et grâce au produit scellant à utiliser pour la fixation des panneaux.

Par exemple, pour insérer un tuyau, on effectue une découpe ronde dans le panneau puis on effectue le scellage de l'ouverture au moyen du produit scellant.

La partie inférieure des fermetures peut avoir un élément mobile, tel qu'un petit coussin inclinable, relié à la partie verticale restante de la fermeture. Ce petit coussin est lui aussi constitué par un matériau isolant.

Le petit coussin a le but de tamponner parfaitement l'espace entre la structure du navire et la partie supérieure de la cabine, car il se pose sur le toit de celle-ci, même pendant sa phase d'insertion, dans l'éventualité où la cabine fournie devait être préfabriquée.

Pour s'adapter encore mieux aux éventuelles irrégularités existantes sur le toit de la cabine, le bord inférieur du petit coussin peut être complété par des franges de finition, réalisées avec le matériau employé pour le revêtement.

Selon la présente invention, les panneaux pour les fermetures B15 sont réalisés en laine de roche, d'une certaine épaisseur, raison pour laquelle ils sont rigides, tout en pouvant être façonnés aisément, alors que les panneaux pour les coupe tirages sont en voile de verre, fins et flexibles.

Le petit coussin est réalisé en laine de verre souple, le revêtement est en toile de fibre de verre ou en aluminium fin, les franges sont découpées en peigne.

Le même produit résistant au feu, de type intumescent, pouvant être utilisé pour prétraiter les panneaux par jet, est employé pour sceller tout le périmètre de la fermeture.

Tous les avantages susdits et d'autres encore, apparaîtront évidents dans la description des figures suivantes, jointes uniquement à titre d'illustration et non pas limitatif dans lesquelles:
la fig. 1 illustre le schéma de la fermeture B15 dans une section transversale d'un navire;
la fig. 2 représente le détail de la fermeture B15 en correspondance du passage d'un tuyau, d'un câble et/ou d'un conduit de ventilation, dans l'espace libre entre le toit d'une cabine et la structure navale, selon la section II-II de la figure 1;
la fig. 3 illustre le détail de la fermeture B15 en correspondance du passage d'un tuyau et/ou câble dans l'ouverture d'allégement du bau renforcé, selon la section III-III de la figure 1;
la fig. 4 représente une union latérale de deux panneaux de la fermeture B15 adjacents;
la fig. 5 est la section d'un panneau coupe tirages.

Dans les différentes figures, les éléments analogues ont été indiqués avec les mêmes symboles numériques.

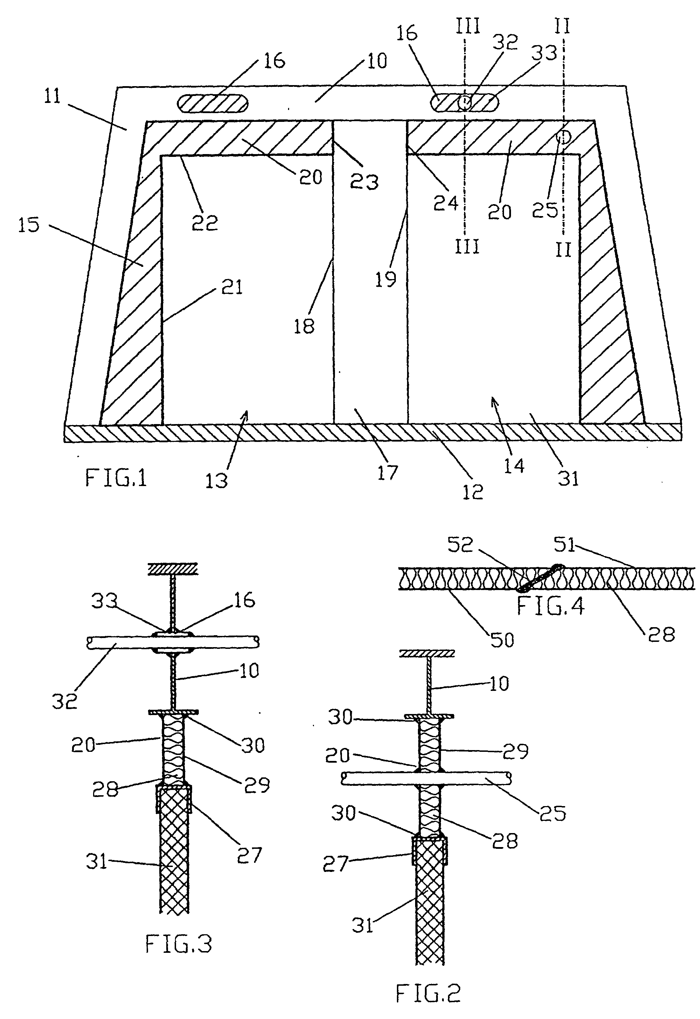

Dans la figure 1, le chiffre 10 indique le bau renforcé, ou poutre en T, l'hiloire renforcée est indiqué par le chiffre 11 et le chiffre 12 indique le pont du navire.

Les cabines 13 et 14 ont respectivement les parois 18 et 19 vers le couloir central 17.

La fermeture B15, indiquée latéralement par le chiffre 15, devra être logée dans l'espace d'isolation entre les parois externes 21 des cabines 13 et 14 et les hiloires renforcées 11; la fermeture B15, dont la partie supérieure est indiquée par le chiffre 20, devra être logée entre le toit, ou les parois supérieures 22, des cabines 13 et 14 et le bau renforcé 10.

La fermeture devra continuer longitudinalement pour fermer la partie supérieure des parois 18 et 19 du couloir 17, avec les panneaux 23 et 24. La figure 2 illustre le passage d'un tuyau, d'un câble et/ou d'un conduit de ventilation 25, dans l'espace libre entre les parois de la cabine 14 et le bau 10.

Ledit tuyau, câble et/ou conduit de ventilation 25, traverse la fermeture 20.

Au-dessous est indiquée la paroi transversale 31 de la cabine 14, dont la partie supérieure a une finition formée par un fer en U indiqué par le chiffre 27, qui chevauche la paroi transversale 31.

Les ouvertures 16 d'allégement du bau renforcé 10, peuvent être utilisées pour le passage des tuyaux et/ou câbles 32, comme illustré dans la figure 3. Autour du tuyau et/ou câble 32, l'ouverture 16 devra être opportunément tamponnée, avec une fermeture B15 indiquée par le chiffre 33, tout comme il faudra tamponner les ouvertures 16 non occupés par les tuyaux ou par les câbles.

Comme illustré dans les figures 2 et 3, les panneaux de la fermeture B15, indiqués par les chiffres 15, 20, 23 et 24, selon la présente invention, sont constitués par une âme 28 en laine de roche. La surface desdits panneaux est protégée par un revêtement 29 qui peut être constitué par une toile de fibre de verre ou par une feuille d'aluminium, collées sur l'âme 28, ou par un prétraitement avec un produit de type intumescent, résistant au feu.

Au moment de la mise en oeuvre, on effectue les scellages périmétraux 30, au moyen d'un matériau de type intumescent résistant au feu, aussi bien en correspondance des points de fixation de la fermeture 15, 20, 23, 24 et 33 avec les tuyaux, câbles et/ou conduits de ventilation 32 et/ou 25, qu'en correspondance des points de fixation des panneaux 15, 20, 23 et 24 sur les différentes structures du navire 10, 11, 12, 26 et 27. Le matériau utilisé pour les scellages 30 peut être le même produit que celui utilisé pour le prétraitement de surface des panneaux de la fermeture.

Selon une réalisation préférée, pour le prétraitement de la surface et pour les scellages 30 est utilisé un produit connu sous la dénomination commerciale de NAVYCROSS M.

À titre d'exemple, des panneaux de 30 mm d'épaisseur, avec densité 130 Kg/m³ ont été utilisés. Étant donné que, habituellement, la hauteur maximum de ces espaces d'isolation devant être tamponnées est de 500 ö 600 mm, les panneaux sont en une seule pièce, dans le sens de la hauteur. Vu que les panneaux ont une longueur moyenne de 1 m., il sera nécessaire d'effectuer des jonctions latérales. Dans ce but, comme illustré dans la figure 4, on coupe transversalement, selon un plan incliné, les extrémités des deux panneaux adjacents 50 et 51, qui sont unis avec un scellage 52, en utilisant le même matériau que celui utilisé pour les scellages 30.

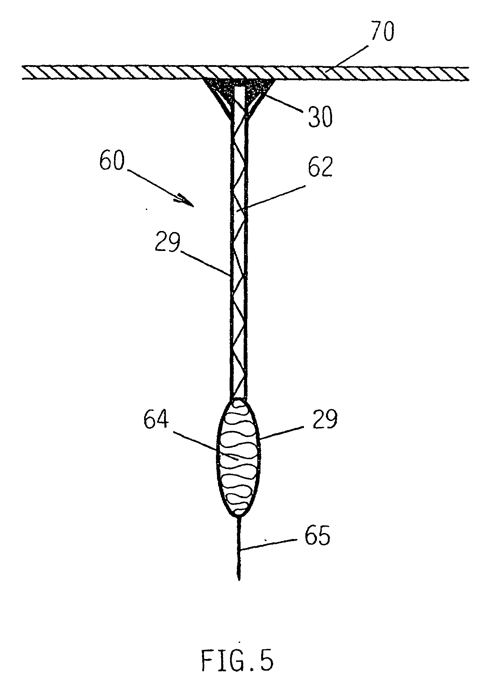

La figure 5 illustre la section d'un panneau coupe tirages qui, aux endroits où cela s'avérera nécessaire, sera posé à des intervalles opportuns sur le toit des cabines dans les positions 23 et 24 de la figure 1.

Le panneau coupe tirages 60 est fixé à la structure supérieure 70 du navire, au moyen du produit scellant résistant au feu déjà mentionné, confectionné en cartouches et connu sous la dénomination commerciale de NAVYCROSS M.

Dans le cas des panneaux coupe tirages 60, le scellage 30 aura lieu sur la partie supérieure et, éventuellement, même sur les côtés. En effet, en bas la tenue est garantie par la présence du petit coussin inférieur 64, relié de façon inclinable avec la partie verticale 62 du panneau coupe tirages 60. Afin d'améliorer l'adhérence contre l'élément qui est au-dessous, par exemple au toit 22 de la cabine, le bord inférieur du petit coussin 64 est équipé de franges 65.

Tout comme pour les fermetures B15, la surface des panneaux coupe tirages 60 est protégée par une couche 29, aussi bien sur la partie verticale 62 que sur le petit coussin 64.

La couche de protection 29 peut être constituée par un revêtement en toile de fibre de verre ou par une feuille en aluminium, collées sur l'âme 62, 64 ou par un prétraitement par jet avec un produit de type intumescent, résistant au feu.

Les franges 65 sont réalisées avec le même matériau que celui du revêtement 29, découpé en peigne.

Selon une réalisation préférée de la présente invention, l'âme de la partie verticale 62 du panneau coupe tirages 60 est constituée par un voile de verre ayant une épaisseur de 3 mm et un poids de 200 g/m²; le petit coussin 64 est en laine de verre, avec une densité de 16 Kg/m³ et une épaisseur de 25 mm.

Le revêtement 29 et les franges 65 sont en toile de fibre de verre ayant un poids de 200 g/m² ou en feuilles d'aluminium ayant une épaisseur de 0,05 mm.

La présente invention comprend toutes les variantes détaillées et les modifications qui peuvent sembler évidentes à un technicien du secteur et ne sortent pas du cadre de la présente invention telle que définie par les revendications suivantes.

## Revendications

1. Dispositif de fermeture des ouvertures (16) sur les profilés de renfort (10) et des espaces libres entre les parois (18, 19, 21, 22, 31) des cabines (13, 14), des couloirs (17) et des structures navales (10, 11), aussi bien dans le sens transversal que longitudinal, **caractérisée par le fait qu'**un premier type de fermeture est réalisée au moyen de panneaux (15, 20, 23, 24, 60) en matériau isolant de la classe B15 sur lesquels est appliqué un revêtement (29), et **caractérisé par le fait qu'**un second type de fermeture est réalisée avec des panneaux coupe tirage (60), qui ont la fonction d'interrompre l'écoulement de l'air incendié, la partie inferieure de ces anneaux coupe tirage (60) comprend un élément mobile, tel qu'un petit coussin (64) inclinable en matériau isolant, relié à la partie verticale restante (62) de la fermeture et que le petit coussin inclinable (64) est réalisé en laine de verre souple et que son bord inférieur est équipé de franges (65), découpées en peigne.

2. Dispositif de fermeture selon la revendication 1, **caractérisée par le fait que** les panneaux sont réalisés en laine de roche (28) pour les panneaux de fermeture B15 (15, 20, 23, 24) ou en voile de verre (62) pour les panneaux coupe tirage (60).

3. Dispositif de fermeture selon la revendication 1, **caractérisée par le fait que** le revêtement (29) appliqué sur les deux côtés des panneaux (15, 20, 23, 24, 60) est constitué par une toile en fibre de verre collée sur l'âme (28, 62) des panneaux.

4. Dispositif de fermeture selon la revendication 1, **caractérisée par le fait que** le revêtement (29) appliqué sur les deux côtés des panneaux (15, 20, 23, 24, 60) est constitué par une fine feuille d'aluminium collée sur l'âme (28, 62) des panneaux.

5. Dispositif de fermeture selon la revendication 1, **caractérisée par le fait que** le revêtement (29) appliqué sur les deux côtés des panneaux (15, 20, 23, 24, 60) est constitué par un prétraitement par jet sur les panneaux (15, 20, 23, 24, 60) avec un produit de finition résistant au feu de type intumescent (30).

6. Procédé pour la mise en oeuvre du dispositif de selon la revendication 1, **caractérisée par le fait que** l'on utilise un produit résistant au feu, de type intumescent, pour les scellages périmétraux (30), aussi bien en correspondance des tuyaux et/ou câbles (32) qui passent à travers les ouvertures (16) d'allégement du bau renforcé (10), qu'en correspondance du passage des tuyaux, câbles et/ou conduits de ventilation (25) à travers les panneaux de fermeture (20), ainsi qu'en correspondance des points de fixation des panneaux (15, 20, 23, 24, 60) sur les différentes structures du navire (10, 11, 12, 26, 27, 70) et que ledit produit résistant au feu (30), de type intumescent, est le même que celui utilisé pour le prétraitement par jet de revêtement (29).

7. Procédé pour la mise en oeuvre du dispositif de selon les revendications précédentes, **caractérisée par le fait que** pour unir latéralement deux panneaux adjacents (50, 51), on coupe transversalement les extrémités de ces derniers, selon un plan incliné, en les scellant (52) avec le même produit résistant au feu, de type intumescent, que celui utilisé pour les scellages périmétraux (30).

8. Procédé pour la mise en oeuvre du dispositif de selon les revendications précédentes, **caractérisée par le fait que** les panneaux de fermeture B15 (15, 20, 23, 24) ont une épaisseur de 30 mm et que leur densité est de 130 Kg/m³, que la partie verticale (62) du panneau coupe tirage (60) est réalisée avec un voile de verre ayant une épaisseur de 3 mm et un poids de 200 g/m², que le petit coussin (64) est en laine de verre et a une densité de 16 Kg/m³ et une épaisseur de 25 mm, que le revêtement (29) et les franges (65), découpées en peigne, sont en toile de fibre de verre ayant un poids de 200 g/m² ou en feuilles d'aluminium ayant une épaisseur de 0,05 mm.

9. Procédé pour la mise en oeuvre du dispositif de selon les revendications précédentes, **caractérisée par le fait que** le produit résistant au feu, de type intumescent, utilisé pour les prétraitements de surface (29) et pour les scellages (30) est un produit connu sous la dénomination commerciale de NAVYCROSS M.

10. Procédé pour la mise en oeuvre du dispositif de fermeture selon les revendications précédentes, **caractérisé par le fait qu'**une fermeture latérale avec les panneaux B15 (15) est placée dans l'espace d'isolation entre les parois externes (21) des cabines (13 et 14) et des hiloires renforcées (11), qu'une fermeture supérieure (20) se trouve entre le toit (22) des cabines (13 et 14) et le bau renforcé (10), qu'une fermeture longitudinale (23 et 24) continue jusqu'à fermer la partie supérieure des parois (18 et 19) du couloir (17), que le panneau coupe tirage (60) est placé à des intervalles opportuns et que les panneaux sont ensuite scellés sur place avec un produit résistant au feu, de type intumescent.

## Claims

1. Device for closing openings (16) in strengthening sections (10) and open spaces between walls (18, 19, 21, 22, 31) of cabins (13, 14), gangways (17) and ship structures (10, 11), both transversally and longitudinally, **characterized by** the fact that a first type of closing consists of panels (15, 20, 23, 24, 60) made in class B15 insulation material with a coating on top (29), and **characterized by** the fact that a second type of closing is made of draughtstop panels (60), in order to stop the flow of burning air from a fire, and that the lower portion of these draughtstop panels (60) features a moving component, like a tilting pad (64) made of insulation material, which is linked to the remaining vertical portion (62) of the closure, and that said tilting pad (64) is made of soft glass wool and that its lower edge is fitted with die-cut comb franges (65).

2. Device for closing according to claim 1, **characterized by** the fact that the panels are made of rock wool (28) for B15 closing panels (15, 20, 23, 24) or surfacing mat (62) for draughtstop panels (60).

3. Device for closing according to claim 1, **characterized by** the fact that the coating (29) applied on both sides of the panels (15, 20, 23, 24, 60) consists of a glass fiber fabric glued on the panel core (28, 62).

4. Device for closing according to claim 1, **characterized by** the fact that the coating (29) applied on both sides of the panels (15, 20, 23, 24, 60) consists of a thin sheet of aluminium glued on the panel core (28, 62).

5. Device for closing according to claim 1, **characterized by** the fact that the coating (29) applied on both sides of the panels (15, 20, 23, 24, 60) is obtained by pre-treating the panels (15, 20, 23, 24, 60) with a fire-resistant intumescent finishing spray (30).

6. Device for closing according to claim 1, **characterized by** the fact that a fire-resistant intumescent product (30) is used to seal the spaces around pipes and/or cables (32) running across the openings (16) designed to make the reinforced beam (10) lighter, as well as around pipes, cables and/or ventilation conduits (25) running across closing panels (20), as well as all the sites where the panels are fixed (15, 20, 23, 24, 60) to the ship structures (10, 11, 12, 26, 27, 70) and that said fire-resistant intumescent product (30) is the same employed for spray pre-treatment of the coating (29).

7. Device for closing according to the above claims, **characterized by** the fact that in order to join two adjacent panels (50, 51) at the sides, their ends are cut along a cross-sectional rake, and then sealed (52) using the same fire-resistant intumescent product (30) employed to seal the perimetral spaces.

8. Device for closing according to the above claims, **characterized by** the fact that the closing panels B15 (15, 20, 23, 24) have a 30 mm thickness, with a 130 Kg/dm³ density, and that the vertical portion (62) of the draughtstop panel (60) is made of a 3 mm thick surfacing mat weighing 200 g/m², that the pad (64) is made of glass wool having a density of 16 Kg/m³ and 25 mm thickness, that the coating (29) and the die-cut comb franges (65) are made of a glass fiber fabric with 200 g/m² weight or of 0.05 mm thick aluminium sheets.

9. Device for closing according to the above claims, **characterized by** the fact that the fire-resistant intumescent product used for surface pre-treatment (29) and for sealing (30) is a known product with the trade name of NAVYCROSS M.

10. Procedure for the installation of the device for closing according to the above claims, **characterized by** the fact that one side closing with B15 panels (15) is placed in the insulation space between the external walls (21) of cabins (13 and 14) and the main frames (11), that an upper closing device (20) is placed between the roof (22) of the cabins (13 and 14) and the reinforced beam (10), that a longitudinal closing device (23 and 24) extends to close the upper part of the gangway (17) walls (18 and 19), that each draughtstop panel (60) is placed at a suitable distance from the other, and that the panels are then sealed on site with a fire-resistant intumescent product.

## Patentansprüche

1. Schließvorrichtung der Bohrungen (16) an den Verstärkungsprofilen (10) und der freien Öffnungen zwischen den Wänden (18, 19, 21, 22, 31) der Kabinen (13, 14), der Korridore (17) und der Schiffstrukturen (10, 11), in Quer- und Längsrichtung, durch die Tatsache gekennzeichnet, dass die erste Schließart durch Paneele (15, 20, 23, 24, 60) aus Isoliermaterial Klasse B15 ausgeführt wird, bei denen eine Beschichtung (29) angebracht wurde; und durch die Tatsache gekennzeichnet, dass die zweite Schließart mit Zugschutzpanellen ausgeführt wird (60), die die Funktion haben, den in Brand gesetzten Luftstrom zu unterbrechen, dass der untere Bereich dieser Zugschutzpaneele (60) ein bewegliches Element einschließt, wie ein neigbares Lager (64) aus Isoliermaterial, das mit dem restlichen senkrechten Teil (62) des Verschlusses verbunden ist und dass das neigbare Lager (64) aus weicher Glaswolle ausgeführt ist und dass seine untere Kante mit kammgestanzten Fransen (65) ausgestattet ist.

2. Schließvorrichtung gemäß Anspruch 1, **dadurch gekennzeichnet, dass** die Paneele aus Steinwolle (28) für Schließpaneele B15 (15, 20, 23, 24) oder aus Glas-Voile (62) für Zugschutzpaneele (60) ausgeführt sind.

3. Schließvorrichtung gemäß Anspruch 1, **dadurch gekennzeichnet, dass** die Beschichtung (29) an beiden Seiten der Paneele (15, 20, 23, 24, 60) aus einem Glasfasergewebe besteht, das am Kern (28, 62) der Paneele aufgeklebt ist.

4. Schließvorrichtung gemäß Anspruch 1, **dadurch gekennzeichnet, dass** die Beschichtung (29) an beiden Seiten der Paneele (15, 20, 23, 24, 60) aus einer dünnen Aluminiumfolie besteht, die am Kern (28, 62) der Paneele aufgeklebt ist.

5. Schließvorrichtung gemäß Anspruch 1, **dadurch gekennzeichnet, dass** die Beschichtung (29) an beiden Seiten der Paneele (15, 20, 23, 24, 60) aus einer Sprühvorbehandlung an den Paneelen besteht (15, 20, 23, 24, 60), die mit einem feuerbeständigen, schwellenden Finish-Produkt ausgeführt wird.

6. Schließvorrichtung gemäß Anspruch 1, **dadurch gekennzeichnet, dass** ein feuerbeständiges, schwellendes Produkt für die Umfangabdichtungen (30) an den Rohren und/oder Kabeln (32) verwendet wird, die durch die Bohrungen (16) zur Erleichterung des verstärkten Balkens (10) gehen, sowie am Durchgang der Rohre, Kabel und/oder Lüftungsleitungen (25) durch die Schließpaneele (20) und an den Anschlusspunkten der Paneele (15, 20, 23, 24, 60) an den verschiedenen Schiffstrukturen (10, 11, 12, 26, 27, 70) und dass dieses feuerbeständige, schwellende Produkt (30) dasselbe ist, das zur Beschichtungssprühvorbehandlung benützt wird (29).

7. Schließvorrichtung gemäß den vorherigen Ansprüchen, **dadurch gekennzeichnet, dass** ihre Endbereiche zur seitlichen Verbindung von zwei anliegenden Paneelen (50, 51) gemäß einer geneigten Fläche quer geschnitten werden und diese (52) mit demselben feuerbeständigen, schwellenden Produkt der Umfangabdichtung (30) abgedichtet werden.

8. Schließvorrichtung gemäß den vorherigen Ansprüchen, **dadurch gekennzeichnet, dass** die Schließpaneele B15 (15, 20, 23, 24) eine Stärke von 30 mm aufweisen und ihre Dichte 130 kg/dm³ beträgt und der senkrechte Teil (62) des Zugschutzpaneels (60) mit einem Glas-Voile ausgeführt wird, der eine Stärke von 3 mm und ein Gewicht von 200 g/m² besitzt und das Lager (64) aus Glaswolle ist und eine Dichte von 16 Kg/m³ und eine Stärke von 25 mm aufweist; und dass die Beschichtung (29) und die kammgestanzten Fransen (65) aus einem Glasfasergewebe mit einem Gewicht von 200 g/m², oder aus Aluminiumfolien mit einer Stärke von 0,05 bestehen.

9. Schließvorrichtung gemäß den vorherigen Ansprüchen, **dadurch gekennzeichnet, dass** das feuerbeständige, schwellende Produkt der Oberflächenvorbehandlungen (29) und der Abdichtungen (30) ein unter der Handelsbezeichnung NAVYCROSS M bekanntes Produkt ist.

10. Verfahren zur Inbetriebnahme der Schließvorrichtung gemäß den vorherigen Ansprüchen, **dadurch gekennzeichnet, dass** ein seitlicher Verschluss mit den Paneelen B15 (15) in dem Isolierbereich zwischen den Außenwänden (21) der Kabinen (13 und 14) der verstärkten Rippen (11) liegt und dass ein oberer Verschluss (20) zwischen dem Dach (22) der Kabinen (13 und 14) und dem verstärkten Balken (10) ist und dass ein länglicher Verschluss (23 und 24) fortgesetzt wird, bis der obere Bereich der Wände (18 und 19) des Korridors (17) geschlossen wird und dass das Zugschutzpaneel (60) mit korrekten Unterbrechungen angeordnet ist und die Paneele dann vor Ort mit einem feuerbeständigen, schwellenden Produkt abgedichtet werden.
